# EUROPÄISCHE PATENTANMELDUNG

(11) **EP 4 593 164 A1**
(43) Veröffentlichungstag der Anmeldung: **30.07.2025**
(21) Anmeldenummer: 25152033.4
(22) Anmeldetag: 15.01.2025
(51) Int. Cl.: H01M 50/103, H01M 50/107, H01M 50/503

(54) **ZELLGEHÄUSE, BATTERIEZELLE, BATTERIEMODUL UND BATTERIE**

(30) Priorität: 26.01.2024 DE 102024000259
(71) Anmelder: Mercedes-Benz Group AG, 70372 Stuttgart (DE)
(72) Erfinder: AMINY, Akramullah, 73732 Esslingen (DE)
(74) Vertreter: Weller, Jürgen

(57) **Zusammenfassung**

Die Erfindung betrifft ein Zellgehäuse (1), ausbildendend einen Aufnahmeraum (2) für eine galvanische Zelle (3), wobei das Zellgehäuse (1) in wenigstens einer Querschnittsebene die Querschnittsform eines regelmäßigen Polygons aufweist. Das erfindungsgemäße Zellgehäuse ist dadurch gekennzeichnet, dass der Aufnahmeraum (2) durch einen Hohlzylinder (1.1) ausgebildet ist, wobei der Hohlzylinder (1.1) in Richtung seiner Mittelachse (A) betrachtet an wenigstens zwei Axialpositionen mit jeweils einem Prisma (1.2) versehen ist, wobei sämtliche Prismen (1.2) die Querschnittsform des regelmäßigen Polygons aufweisen, und wobei die Summe der Höhen (h) aller Prismen (1.2) geringer ist als die Höhe (H) des Hohlzylinders (1.1).

## Beschreibung

Die Erfindung betrifft ein Zellgehäuse nach der im Oberbegriff von Anspruch 1 näher definierten Art, eine Batteriezelle nach der im Oberbegriff von Anspruch 8 näher definierten Art sowie ein Batteriemodul und eine Batterie.

Zellgehäuse mit polygonalen, insbesondere hexagonalen Querschnitten, sind prinzipiell aus dem Stand der Technik bekannt. Die DE 10 2021 122 486 A1 beschreibt, ähnlich wie die CN 217 134 494 U, Zellgehäuse mit einem polygonalen Querschnitt, welche in den dargestellten Ausführungsbeispielen jeweils einen sechseckigen Querschnitt aufweisen. Die Zellgehäuse sind elektrisch in der üblichen Art und Weise aufgebaut, sodass das Zellgehäuse selbst einen der Batteriepole ausbildet, und dass der andere Batteriepol beispielsweise am Deckel oder am Boden aus dem Zellgehäuse herausgeführt ist. Die genannte CN 217 134 494 U beschreibt hier einen zentralen Anschluss für die negativen Elektroden und mehrere über dem Umfang des Bodens verteilte Anschlüsse für die Kontaktfahnen der positiven Elektroden.

Derartige Zellgehäuse haben beim Aufbau einer Batterie dabei den Vorteil, dass sie sehr dicht und ohne Lücken zwischen den einzelnen Zellgehäusen gepackt werden können. Die Zellgehäuse stützen sich dabei aneinander ab, was einen effektiven Kraftfluss von Zellgehäuse zu Zellgehäuse erlaubt. Solche prismatischen Zellgehäuse müssen jedoch, wie es beispielsweise in der oben genannten DE 10 2021 122 486 A1 beschrieben ist, über herkömmliche Zellverbinder elektrisch kontaktiert werden. Dies ist aufwändig und verursacht einen hohen Bedarf an Bauraum. Außerdem geht die Herstellung von vollständig prismatisch ausgestalteten Zellgehäusen, insbesondere im Vergleich mit Rundzellen, mit einem hohen Materialbedarf einher, was die Fertigungskosten erhöht.

Ferner offenbart die DE 10 2014 206 646 A1 eine Energiespeichereinheit in Form eines Batteriemoduls und ein Energiespeichersystem. Das Batteriemodul weißt eine Vielzahl an Aufnahmeeinheiten für Batteriezellen auf, welche so ausgeführt sind, dass die Pole der Batteriezellen jeweils in einer Ebene liegen. Die Pole werden jeweils mit einer respektiven Leiterplatte miteinander verschaltet. Die Aufnahmeeinheiten können als Zellgehäuse erachtet werden. Die Zellgehäuse können als Hohlzylinder ausgeführt sein, an deren beiden Stirnseiten hexagonal ausgeführte Abschlusselemente bzw. Anschlusselemente als Verbindungselement vorgesehen sind.

Ferner offenbart die DE 10 2019 108 453 A1 eine wabenartige Energiespeicherzellenaufnahme sowie ein Akkupack und ein Verfahren zu dessen Herstellung. Dabei wird jeweils eine zylindrische Batteriezelle von zwei an den Stirnseiten der Batteriezelle vorgesehenen Aufnahmevorrichtungen gehalten. Die Aufnahmevorrichtungen weisen eine wabenartige Struktur auf.

Ferner offenbart die WO 2022/157115 A1 eine Energiespeichereinrichtung für ein Kraftfahrzeug. Die Energiespeichereinrichtung umfasst eine oder mehrere Batteriezellen, einen oder mehrere Träger sowie eine oder mehrere Schutzfolien. Die Schutzfolie ist zwischen den Batteriezellen und den Trägern angeordnet. Die Batteriezellen sind als Rundzellen ausgeführt und können dabei stirnseitig von jeweils einer Aufnahme gehalten sein.

Ferner offenbart die DE 10 2021 121 981 A1 eine Batterie. Die Batterie umfasst ein einteilig ausgeführtes Batteriegehäuse mit mindestens einem Funktionselement und/oder Strukturelement. Vom Batteriegehäuse ausgebildete Aufnahmeräume können die Form einer Wabe aufweisen.

Ferner offenbart die DE 10 2011 101 022 A1 ein Batteriepaket sowie eine Anordnung zur Halterung. Die Anordnung zur Halterung dient zur Fixierung von Batteriezellen am Batteriepaket mittels mehrerer Halteeinrichtungen. Die Halteeinrichtungen werden durch Federelemente ausgebildet.

Zudem offenbart die WO 2023/142531 A1 ein Batteriezellmodul und ein Batteriesystem. Das Batteriemodul umfasst eine Vielzahl an Rundzellen an deren jeweiligen Stirnseiten wabenförmig ausgeführte Haltekäfige angeordnet sind.

Der vorliegenden Erfindung liegt die Aufgabe zugrunde ein verbessertes Zellgehäuse anzugeben, welches sich durch geringere Fertigungskosten auszeichnet.

Erfindungsgemäß wird diese Aufgabe durch ein Zellgehäuse mit den Merkmalen des Anspruch 1 gelöst. Vorteilhafte Ausgestaltungen und Weiterbildungen sowie eine Batteriezelle, ein Batteriemodul und eine Batterie ergeben sich aus den hiervon abhängigen Ansprüchen.

Ein gattungsgemäßes Zellgehäuse, ausbildendend einen Aufnahmeraum für eine galvanische Zelle, wobei das Zellgehäuse in wenigstens einer Querschnittsebene die Querschnittsform eines regelmäßigen Polygons aufweist, sieht vor, dass der Aufnahmeraum durch einen Hohlzylinder ausgebildet ist, wobei der Hohlzylinder in Richtung seiner Mittelachse betrachtet an wenigstens zwei Axialpositionen mit jeweils einem Prisma versehen ist, wobei sämtliche Prismen die Querschnittsform des regelmäßigen Polygons aufweisen, und wobei die Summe der Höhen aller Prismen geringer ist, als die Höhe des Hohlzylinders. Erfindungsgemäß ist dabei der Inkreisradius des regelmäßigen Polygons gleich groß wie der Außenradius des Hohlzylinders.

Indem nicht das gesamte Zellgehäuse, sondern nur Abschnitte davon prismatisch ausgebildet sind, lassen sich die Vorteile zylindrischer Rundzellen und prismatischer Zellen kombinieren. Dabei ist es möglich den Materialbedarf zur Herstellung des Zellgehäuses gegenüber einer kompletten prismatischen Ausführung des Zellgehäuses zu reduzieren.

Beim Bilden eines Zellstapels, umfassend mehrere das Zellgehäuse umfassende Batteriezellen, berühren sich die jeweiligen Seitenflächen der Prismen, sodass, beispielsweise bei einem Unfall, entsprechende Kräfte über die Seitenflächen der Prismen weitergeleitet werden können. Hierdurch wird die mechanische Integrität einer solche Batteriezellen umfassenden Batterie verbessert. Aufgrund der klar definierten geometrischen Gestalt lassen sich entsprechende Batteriezellen zudem besonders leicht stapeln. "Stapeln" meint hierbei insbesondere das seitliche nebeneinander anordnen mehrerer das erfindungsgemäße Zellgehäuse umfassende Batterieeinzelzellen nebeneinander, sodass sich die jeweiligen Seitenflächen der Prismen berühren.

In Richtung der Mittelachse des Hohlzylinders betrachtet sind dabei die jeweiligen Prismen gleich ausgerichtet. Dies bedeutet, dass in die Axialrichtung betrachtet, jeweilige Ecken und Kanten des die Grundfläche der jeweiligen Prismen ausbildenden regelmäßigen Polygons miteinander fluchten.

Generell kann es sich um ein beliebiges regelmäßiges Polygon handeln, wie beispielsweise ein gleichseitiges Dreieck, Viereck, Fünfeck, Sechseck usw. Besonders bevorzugt handelt es sich jedoch um ein regelmäßiges Sechseck, also ein Hexagon. Dies erlaubt eine besonders effiziente Kontaktierung entsprechender Batteriezellen, worauf im Folgenden noch näher eingegangen wird.

Dabei sind entlang der axialen Ausdehnung des Hohlzylinders wenigstes zwei Prismen vorgesehen. Es können jedoch auch mehr Prismen vorgesehen sein, wie beispielsweise drei, vier, fünf oder auch noch mehr Prismen, solange die Summe der Höhen aller Prismen geringer ist, als die Höhe des Hohlzylinders. Werden mehrere das erfindungsgemäße Zellgehäuse umfassende Batteriezellen zu einem Zellstapel angeordnet, so werden bevorzugt solche Zellgehäuse verwendet, bei denen jeweilige Prismen auf der gleichen Axialposition angeordnet sind. Dabei ist es generell auch möglich, dass einzelne Prismen zueinander benachbarter Zellgehäuse eine abweichende Axialposition zueinander aufweisen, sodass sich diese Prismen an den jeweiligen einander zugewandten Seitenflächen nicht berühren. Insbesondere bei Zellgehäusen mit einer besonders hohen axialen Ausdehnung kann an jeder Stirnseite des Hohlzylinders ein Prisma vorgesehen sein sowie ein Prisma mittig zwischen den beiden an den Stirnseiten befindlichen Prismen angeordnet sein.

Da der Inkreisradius des regelmäßigen Polygons gleich groß ist wie der Außenradius des Hohlzylinders, lässt sich besonders viel Material zur Herstellung des erfindungsgemäßen Zellgehäuses einsparen. Für jede Seite eines jeweiligen Prismas liegt dann in der Mitte einer jeweiligen Seite eine über die Axialrichtung durchgehende bündige Linie zwischen den jeweiligen Prismen und der Mantelfläche des Hohlzylinders vor. Wird nun ein Zellstapel gebildet, so berühren sich die jeweiligen Zellgehäuse an diesen Berührlinien. Somit lassen sich Kräfte nicht nur über die Seitenflächen der Prismen zwischen den einzelnen Zellgehäusen weiterleiten, sondern auch über diese Berührlinien.

Gemäß einer nicht unter den Schutzumfang der Erfindung fallenden Ausführungsform ist es auch denkbar, dass der Inkreisradius des regelmäßigen Polygons größer ist, als der Außenradius des Hohlzylinders. Somit stehen die Prismen in Radialrichtung betrachtet an jeder in Umfangsrichtung betrachteten Stelle über die Mantelfläche des Hohlzylinders hervor. Hierdurch wird ein Freiraum zwischen den benachbarten Mantelflächen der Zellgehäuse geschaffen, was beispielsweise dazu genutzt werden kann, ein Kühlmedium zwischen den Zellgehäusen hindurchzuführen. Da sich die Zellgehäuse aneinander abstützen sind keine weiteren Maßnahmen zum Fixieren ihrer Anordnungsposition in einem entsprechenden Batteriemodul bzw. einer Batterie notwendig, wie beispielsweise eine Vergussmasse. Hierdurch lässt sich zusätzliches Gewicht einsparen. Kommt es zu einem thermischen Ereignis wie einem thermischen Durchgehen einer Batteriezelle, so hat dies zudem den Vorteil der besseren Wärmedämmung zur jeweiligen Nachbarzelle, sodass die jeweilige Nachbarzelle langsamer durch die aus der beschädigten Batteriezelle austretenden Flammen und/oder heißen Gase erwärmt wird.

Eine vorteilhafte Weiterbildung des erfindungsgemäßen Zellgehäuses sieht vor, dass wenigstens ein Prisma monolithisch mit dem Hohlzylinder ausgeführt ist. Generell können die Prismen auch mehrteilig gegenüber dem Hohlzylinder ausgeführt sein. Solche separaten Bauteile können beispielsweise auf den Hohlzylinder aufgeschoben werden oder auf den Hohlzylinder aufgelegt werden und dann nachträglich mit dem Hohlzylinder verbunden werden, wobei hierzu alle üblichen formschlüssigen, kraftschlüssigen und/oder stoffschlüssigen Verbindungstechniken verwendet werden können, wie beispielsweise Ultraschallschweißen. Beispielsweise können Prismen durch einen Presssitz am Hohlzylinder befestigt werden. Insbesondere wenn jeweilige Prismen mit dem Hohlzylinder verlötet oder verschweißt werden ist es auch möglich eine elektrisch leitfähige Anbindung herzustellen. Es ist auch denkbar jeweilige Prismen translatorisch verschiebbar am Hohlzylinder zu befestigen. Dies ermöglicht es die Axialposition eines jeweiligen Prismas nach Herstellung des Zellgehäuses nachträglich anzupassen. Dabei wäre es auch denkbar den Hohlzylinder an seinem Mantel mit einem Außengewinde zu versehen und die jeweiligen Prismen als Mutter auszuführen, die, dank eines entsprechenden Innengewindes, an einer durch das jeweilige Prisma hindurchreichenden Bohrung auf den Hohlzylinder aufgeschraubt werden können. Auch eine translatorische Verstellung der Axialposition kommt infrage.

Besonders vorteilhaft ist es jedoch, wenn zumindest ein Prisma monolithisch mit dem Hohlzylinder ausgeführt ist. Hierdurch wird sichergestellt, dass das jeweilige Prisma zuverlässig seine Sollposition gegenüber dem Hohlzylinder einhält. Zudem können der Hohlzylinder und das jeweilige Prisma aus einem Bauteil gemeinsam gefertigt werden, was den Aufwand zur Herstellung des erfindungsgemäßen Zellgehäuses reduziert. Besonders vorteilhaft weist das erfindungsgemäße Zellgehäuse dabei genau zwei Prismen auf, die beide monolithisch mit dem Hohlzylinder ausgeführt sind. Weiterhin wäre es besonders vorteilhaft, wenn ein monolithisch mit dem Hohlzylinder ausgeführtes Prisma vorgesehen ist und genau ein zweiteilig gegenüber dem Hohlzylinder ausgeführtes Prisma vorgesehen ist.

Entsprechend einer weiteren vorteilhaften Ausgestaltung des erfindungsgemäßen Zellgehäuses schließt die Grundfläche zumindest eines Prismas bündig mit einer Stirnseite des Hohlzylinders ab. Mit anderen Worten können Prismen auch den Boden bzw. Deckel des Zellgehäuses ausbilden. Wie im vorigen bereits erwähnt, ist es dabei besonders vorteilhaft, wenn ein Prisma monolithisch mit dem Hohlzylinder ausgeführt ist und ein Prisma zweiteilig zum Hohlzylinder ausgeführt ist. So kann beispielsweise das monolithisch mit dem Hohlzylinder ausgeführte Prisma den Boden ausbilden, sodass die galvanische Zelle schnell und einfach durch die verbleibende Öffnung in den Hohlzylinder eingeführt werden kann. Die Öffnung kann dann nachträglich mit dem zweiteilig zum Hohlzylinder ausgeführten Prisma verschlossen werden. Bei einer Ausführungsform, bei der beide an den Stirnseiten des Hohlzylinders vorgesehene Prismen monolithisch mit dem Hohlzylinder ausgeführt sind, ist es denkbar, dass zumindest eines der Prismen einen verschließbaren Deckel aufweist, um besagte galvanische Zelle in den Aufnahmeraum einzuführen. Der Deckel kann aus einem Material oder einer Kombination mehrerer Stoffe bestehen, beispielsweise aus Kupfer und Aluminium.

Entsprechend einer weiteren vorteilhaften Ausgestaltung des erfindungsgemäßen Zellgehäuses umfasst der Hohlzylinder und/oder wenigstens ein Prisma zumindest anteilig Metall und/oder Kunststoff. Dabei kommen alle üblichen Metalle bzw. Metalllegierungen sowie Kunststoffe infrage. Eine Verwendung von Metall zur Ausbildung des Zellgehäuses erlaubt es zumindest Abschnitte des Zellgehäuses elektrisch leitfähig auszubilden. Zudem lassen sich aus Metall gefertigte Bauteile mechanisch steif ausführen, was die Aufnahme und Weiterleitung insbesondere hoher Kräfte begünstigt, sodass mechanisches Versagen zumindest abgeschwächt werden kann. Kunststoff zeichnet sich hingegen durch eine leichtere Verarbeitbarkeit und geringere Kosten aus. Zudem lassen sich durch das gezielte Vorsehen von Kunststoffabschnitten oder einer vollständigen Fertigung aus Kunststoff elektrisch isolierte Bereiche am Zellgehäuse vorsehen. Beispielsweise kann der Hohlzylinder vollständig aus Metall gefertigt sein und jeweilige Prismen aus Kunststoff gefertigt sein, wobei die Grundfläche zumindest eines Prismas einen insbesondere verschließbaren Deckel ausbildet. Der Deckel kann aus zwei insbesondere zueinander elektrisch isolierten Metallen gefertigt sein, wie Kupfer und Aluminium.

Eine weitere vorteilhafte Ausgestaltung des erfindungsgemäßen Zellgehäuses sieht ferner vor, dass
- wenigstens eine Seitenfläche zumindest eines Prismas einen Kontaktpol zum elektrischen Verschalten mehrerer galvanischer Zellen ausbildet, wobei hierzu die wenigstens eine Seitenfläche mit einer Elektrode einer im Aufnahmeraum anordbaren galvanischen Zelle verbindbar ist; und/oder
- wenigstens ein Abschnitt der Grundfläche zumindest eines Prismas einen Kontaktpol zum elektrischen Verschalten mehrerer galvanischer Zellen ausbildet, wobei hierzu der wenigstens eine Abschnitt mit einer Elektrode einer im Aufnahmeraum anordbaren galvanischen Zelle verbindbar ist.

Somit können sowohl die Stirnseiten, als auch die Seitenflächen eines jeweiligen Prismas einen Kontaktpol ausbilden. Somit lassen sich die vielfältigsten Möglichkeiten schaffen, wie entsprechende das erfindungsgemäße Zellgehäuse aufweisende Batteriezellen miteinander verschaltet werden können. Wird wenigstens ein Abschnitt der Grundfläche eines Prismas als Kontaktpol verwendet, so handelt es sich bei diesem Prisma bevorzugt um ein an einer Stirnseite des Hohlzylinders vorgesehenes Prisma. Bei einer Verwendung von einem Abschnitt einer Grundfläche eines Prismas als Kontaktpol lassen sich übliche Zellverbindungstechniken weiterverwenden. Beispielsweise können einander benachbarte Batteriezellen über mit den jeweiligen Prismen verschweißte Zellverbinder in Reihe und/oder parallel geschaltet werden.

Da sich zueinander benachbarte Prismen an ihren jeweiligen Seitenflächen berühren ist es jedoch auch vorteilhaft möglich, dass eine elektrische Verschaltung zueinander benachbarter Batteriezellen über diese Seitenflächen erfolgt. Dabei kann eine jeweilige vollständige Seitenfläche als Kontaktpol verwendet werden, oder zumindest ein jeweiliger Abschnitt einer solchen Seitenfläche. Werden die Seitenflächen von Prismen als Kontaktpol verwendet, so kann auf das Vorsehen üblicher Zellverbinder verzichtet werden, wodurch weitere Komponenten eingespart werden, was den Fertigungsaufwand weiter reduziert. Dies führt analog zu einer Reduktion der Herstellungskosten eines mehrere erfindungsgemäße Zellgehäuse umfassenden Batteriemoduls.

Entsprechend einer weiteren vorteilhaften Ausgestaltung des erfindungsgemäßen Zellgehäuses ist es ferner vorgesehen, dass
- eine erste Seitenfläche eines ersten Prismas mit einer ersten Elektrode der im Aufnahmeraum anordbaren galvanischen Zelle verbindbar ist und eine zweite Seitenfläche des ersten Prismas mit einer zweiten Elektrode der im Aufnahmeraum anordbaren galvanischen Zelle verbindbar ist, wobei die erste Seitenfläche und die zweite Seitenfläche zueinander elektrisch isoliert sind; und/oder
- ein erster Abschnitt der Grundfläche eines ersten Prismas mit einer ersten Elektrode der im Aufnahmeraum anordbaren galvanischen Zelle verbindbar ist und ein zweiter Abschnitt der Grundfläche des ersten Prismas mit einer zweiten Elektrode der im Aufnahmeraum anordbaren galvanischen Zelle verbindbar ist, wobei der erste Abschnitt und der zweite Abschnitt zueinander elektrisch isoliert sind.

Somit ist es möglich, dass wenigstens eine Seitenfläche und/oder wenigstens ein Abschnitt der Grundfläche eines jeweiligen Prismas einen Pluspol oder Minuspol ausbildet. Dies erlaubt es, die vielfältigsten Kontaktierungsmöglichkeiten zum Verschalten mehrerer benachbarter das erfindungsgemäße Zellgehäuse umfassenden Batteriezellen zu ermöglichen. Wie im Folgenden noch erwähnt wird, ist auch eine solche das erfindungsgemäße Zellgehäuse umfassende Batteriezelle Teil der Erfindung. Bei einer solchen Batteriezelle sind entsprechend die im Aufnahmeraum angeordneten galvanischen Zellen tatsächlich mit den jeweiligen Seitenflächen bzw. Abschnitten der Grundfläche des jeweiligen Prismas elektrisch leitend verbunden.

Eine weitere vorteilhafte Ausgestaltung des erfindungsgemäßen Zellgehäuses sieht ferner vor, dass wenigstens eine Seitenfläche zumindest eines Prismas mit einem elektrischen Isolator versehen ist oder das zumindest eine Prisma vollständig aus einem elektrisch nicht leitfähigem Material besteht. Je nach Anwendungsfall kann es auch wünschenswert sein, dass zueinander benachbarte Zellgehäuse bzw. Batteriezellen keinen Stromfluss über die jeweiligen Berührflächen der Seitenflächen der Prismen ermöglichen. Hierzu können die Seitenflächen vollständig mit besagtem Isolator versehen werden oder aber das vollständige Prisma aus einem elektrisch nicht leitfähigen Material hergestellt werden.

Eine Batteriezelle, umfassend wenigstens eine galvanische Zelle, insbesondere ausgeführt als Elektrodenwickel, weist erfindungsgemäß ein im vorigen beschriebenes Zellgehäuse auf, wobei die galvanische Zelle im Aufnahmeraum des Zellgehäuses angeordnet ist. Wie bereits erwähnt, ist somit eine das erfindungsgemäße Zellgehäuse aufweisende Batteriezelle ebenfalls Teil der Erfindung. Besonders bevorzugt handelt es sich dabei bei der im Aufnahmeraum angeordneten galvanischen Zelle um einen Elektrodenwickel, auch als "Jelly-Roll" bezeichnet. Bei der erfindungsgemäßen Batteriezelle kann es sich generell sowohl um eine Primärbatterie, als auch um eine Sekundärbatterie handeln. Besonders bevorzugt ist die Batteriezelle als Sekundärbatterie, also als Akkumulator, ausgeführt, was die Verwendung der erfindungsgemäßen Batteriezelle zur Ausbildung einer Traktionsbatterie für ein Fahrzeug, insbesondere einen batterieelektrisch angetriebenen Pkw, Lkw, Transporter, Bus oder dergleichen erlaubt.

Ein Batteriemodul weist erfindungsgemäß wenigstens zwei miteinander elektrisch verschaltete im vorigen beschriebene Batteriezellen auf. Somit ist auch ein erfindungsgemäße Batteriezellen umfassendes Batteriemodul Teil der Erfindung. Batteriezellen können dabei in Reihe und/oder parallel verschaltet sein. Hierdurch lässt sich eine den jeweiligen Anforderungen entsprechende Kapazität sowie die vom Batteriemodul abgebbare Spannung einstellen.

Entsprechend einer vorteilhaften Ausgestaltung des erfindungsgemäßen Batteriemoduls sind wenigstens zwei einander berührende Zellgehäuse an ihrer jeweiligen Berührfläche und/oder Berührlinie miteinander stoffschlüssig verbunden, insbesondere verschweißt. Hierdurch lässt sich eine besonders hohe mechanische Integrität des erfindungsgemäßen Batteriemoduls wahren sowie eine herausragende elektrische Leitfähigkeit erzielen.

Erfindungsgemäß umfasst eine Batterie wenigstens ein solches Batteriemodul. Bei der Batterie kann es sich beispielsweise um eine Traktionsbatterie eines Fahrzeugs handeln.

Weitere vorteilhafte Ausgestaltungen des erfindungsgemäßen Zellgehäuses, der erfindungsgemäßen Batteriezelle, des erfindungsgemäßen Batteriemoduls und der erfindungsgemäßen Batterie ergeben sich auch aus den Ausführungsbeispielen, welche nachfolgend unter Bezugnahme auf die Figuren näher beschrieben werden.

Dabei zeigen:
- Fig. 1: eine schematische perspektivische Darstellung und eine Schnittansicht durch eine erfindungsgemäße Batteriezelle, umfassend ein erfindungsgemäßes Zellgehäuse;
- Fig. 2: eine schematische Draufsicht auf das erfindungsgemäße Zellgehäuse;
- Fig. 3: mehrere schematische Schnittansichten durch das erfindungsgemäße Zellgehäuse, wobei Prismen an Stirnseiten des Zellgehäuses vorgesehen sind;
- Fig. 4: mehrere schematische Schnittansichten durch das erfindungsgemäße Zellgehäuse gemäß alternativer Ausführungsformen;
- Fig. 5: mehrere schematische Darstellungen der Verteilung von Kontaktpolen am erfindungsgemäße Zellgehäuse; und
- Fig. 6: eine schematische perspektivische Darstellung eines Ausschnitts eines erfindungsgemäßen Batteriemoduls.

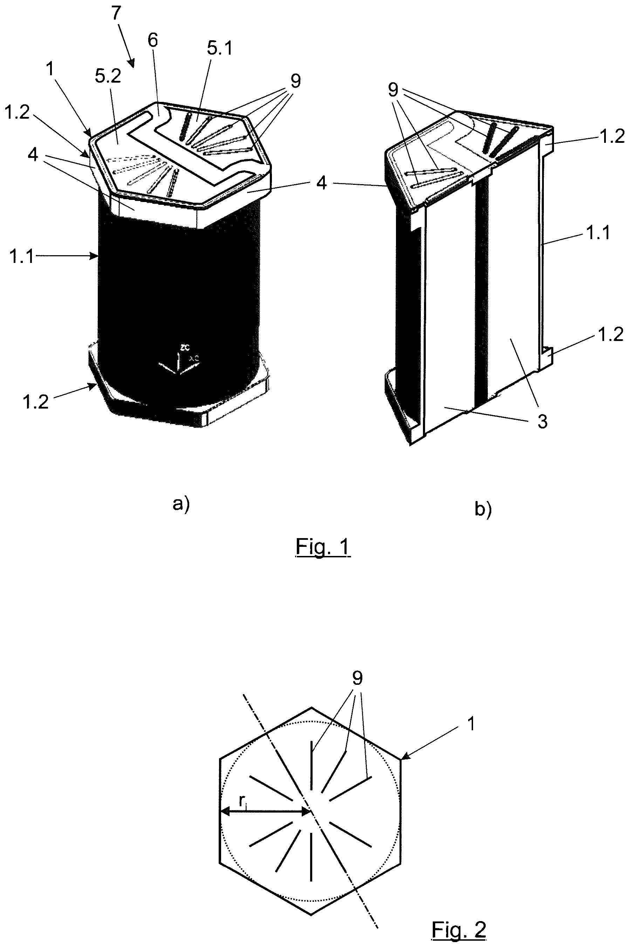

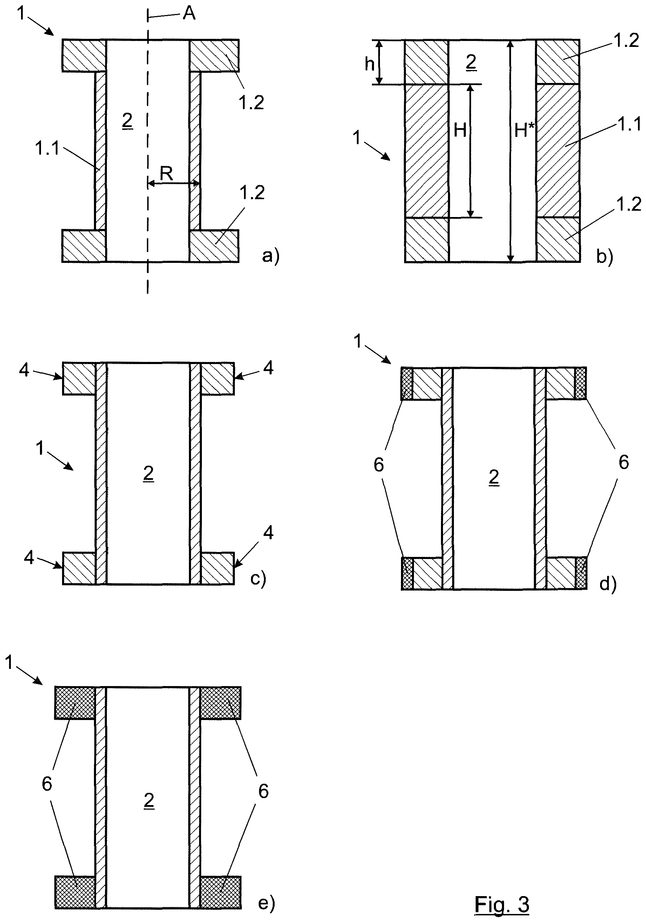

Figur 1a) zeigt eine perspektivische Darstellung einer erfindungsgemäßen Batteriezelle 7, umfassend ein erfindungsgemäßes Zellgehäuse 1. Figur 1b) zeigt eine Schnittansicht durch die erfindungsgemäße Batteriezelle 7. Das erfindungsgemäße Zellgehäuse 1 umfasst einen Hohlzylinder 1.1 und zumindest zwei gemeinsam oder getrennt zum Hohlzylinder 1.1 ausgebildete Prismen 1.2. So können mehrteilig zum Hohlzylinder 1.1 ausgeführte Prismen 1.2 mit dem Hohlzylinder 1.1. verbunden sein. Das Zellgehäuse 1 bildet einen Aufnahmeraum 2 (siehe Figur 3) für eine galvanische Zelle 3, besonders bevorzugt ausgeführt als Elektrodenwickel, aus. Teile des Zellgehäuses 1 können mit den Elektroden der galvanischen Zelle 3 an unterschiedlichsten Stellen verbunden sein, sodass an verschiedenen Stellen des Zellgehäuses 1 jeweilige Kontaktpolen zum miteinander Verschalten von Batteriezellen 7 vorgesehen werden können. Hierauf wird im Folgenden noch näher eingegangen.

Das erfindungsgemäße Zellgehäuse 1 verbindet die Vorteile von prismatisch ausgeführten Zellgehäusen und zylindrisch ausgeführten Zellgehäusen. So können einander benachbarte Batteriezellen 7 an den jeweiligen Seitenflächen 4 der jeweiligen Prismen 1.2 einander berühren und sich somit aneinander abstützen. Dies erlaubt es beispielsweise bei einer übermäßigen mechanischen Beanspruchung Kräfte zwischen den verschiedenen Zellgehäusen 1 weiterzuleiten, beispielsweise bei einem Unfall eines batterieelektrisch angetriebenen Fahrzeugs, dessen Traktionsbatterie eine Vielzahl der erfindungsgemäßen Batteriezellen umfasst. Dies verbessert somit die mechanische Integrität und die Unfallschutzwirkung. Da nicht das gesamte Zellgehäuses 1 prismatisch ausgebildet ist, sondern auch der Hohlzylinder 1.1 vorgesehen ist, lässt sich Material einsparen. Somit reduziert sich das Gewicht des Zellgehäuses 1 und die Fertigungskosten lassen sich senken.

Wie Figur 1 zeigt, kann ein jeweiliges Prisma 1.2 in einen ersten Abschnitt 5.1 und einen zweiten Abschnitt 5.2 unterteilt sein. Der jeweilige Abschnitt 5.1, 5.2 kann sich nur über eine Teilhöhe des jeweiligen Prismas 1.2 erstrecken und somit eine Art "Deckel" ausbilden, oder sich auch über die vollständige Höhe h (siehe Figur 3) eines jeweiligen Prismas 1.2 erstrecken. Beispielsweise kann der erste Abschnitt 5.1 aus Aluminium gefertigt sein und der zweite Abschnitt 5.2 aus Kupfer. Auch wäre es möglich, dass lediglich die jeweiligen Stirnseiten mit einer Aluminiumplatte bzw. Kupferplatte versehen sind. Zum Isolieren des ersten und zweiten Abschnitts 5.1, 5.2 können diese durch einen Isolator 6 voneinander abgegrenzt sein. Der Isolator 6 kann auch zumindest abschnittsweise um die jeweiligen Seitenflächen 4 herum verlaufen. Zudem kann die Grundfläche bzw. Deckfläche eines jeweiligen Prismas 1.2 mit Vertiefungen 9 versehen sein, was das Anbringen von Zellverbindern am Zellgehäuse 1, beispielsweise durch Schweißen, erleichtern kann.

Figur 2 zeigt eine Draufsicht auf das Zellgehäuse 1. Figur 2 veranschaulicht durch eine Strichpunktlinie den Verlauf eines Schnitts durch das Zellgehäuse 1, deren unterschiedliche Ansichten in Figur 3 gezeigt sind. Figur 2 zeigt auch den Inkreisradius rᵢ des regelmäßigen Polygons, welches besagte Grundfläche bzw. Deckfläche eines jeweiligen Prismas 1.2 ausbildet, hier vorteilhaft in Form eines Hexagons.

Figur 3 zeigt ausschließlich Ausführungsbeispiele, bei denen die jeweiligen Prismen 1.2 an den Stirnseiten des Hohlzylinders 1.1 vorgesehen sind und bündig mit diesem abschließen, bzw. auf diesen aufgesetzt sind. Entlang einer Mittelachse A des Hohlzylinders 1.1 betrachtet sind dabei an wenigstens zwei Axialpositionen wenigstens zwei Prismen 1.2 vorgesehen. Die Summe sämtlicher Höhen h aller Prismen 1.2 ist dabei geringer als die Höhe H des Hohlzylinders 1.1. Diese Aussage bezieht sich dabei nicht zwangsweise auf die einzelnen physischen Bauteile, sondern vielmehr auf die Geometrie an sich. Im erweiterten Sinne können somit die den Hohlzylinder 1.1 axial verlängernden Abschnitte eines jeweiligen Prismas 1.2 auch als Teil des Hohlzylinders 1.1 erachtet werden. Dies wird in Figur 2b) durch die beiden Höhen H und H* angedeutet. Dabei können verschiedene Prismen 1.2 auch unterschiedliche Höhen h aufweisen (nicht dargestellt).

Ferner ist der in Figur 2 gezeigte Inkreisradius rᵢ des regelmäßigen Polygons, welches die Grundfläche der jeweiligen Prismen 1.2 ausbildet, gleichgroß wie der Außenradius R des Hohlzylinders 1.1. Ausführungsformen bei denen der Inkreisradius rᵢ und der Außenradius R voneinander abweichen fallen nicht unter den Schutzumfang der Erfindung.

Die Figuren 3a) und b) zeigen Ausführungsformen, bei denen die jeweiligen Prismen 1.2 auf die Stirnseiten des Hohlzylinders 1.1 aufgesetzt sind. In den Figuren 3c) bis e) erstreckt sich hingegen der Hohlzylinder 1.1 durch die Prismen 1.2 hindurch.

Figur 3a) zeigt eine Ausführungsform bei der Inkreisradius rᵢ des regelmäßigen Polygons größer ist als der Außenradius R.

In Figur 3b) ist hingegen der Inkreisradius rᵢ des regelmäßigen Polygons gleichgroß wie der Außenradius R.

Figur 3d) zeigt eine Ausführungsform, bei der ein Isolator 6 entlang der jeweiligen Seitenflächen 4 der Prismen 1.2 vorgesehen ist.

Figur 3e) zeigt hingegen eine Ausführungsform, in der die jeweiligen Prismen 1.2 vollständig aus einem elektrisch nicht leitfähigen Material bestehen.

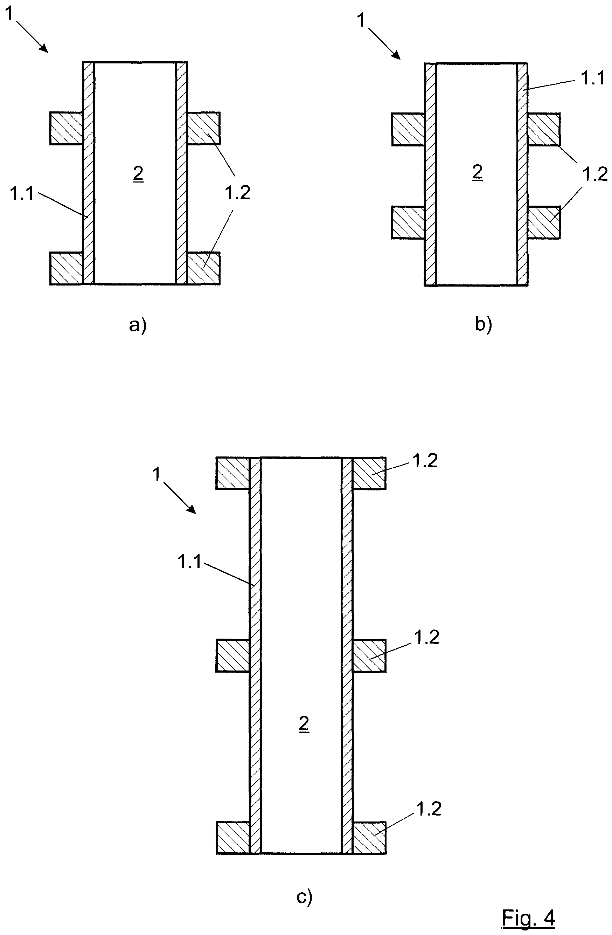

Figur 4 zeigt weitere mögliche Ausführungsbeispiele. In Figur 4a) ist eines der Prismen 1.2 nicht an der Stirnseite des Hohlzylinders 1.1 vorgesehen, sondern entlang der Mittelachse A hierzu versetzt angeordnet.

Figur 4b) zeigt eine Ausführungsform, bei der sämtliche Prismen 1.2 einen Abstand zu den jeweiligen Stirnseiten des Hohlzylinders 1.1 aufweisen.

Figur 4c) zeigt eine weitere Ausführungsform mit mehr als zwei Prismen 1.2. Hier ist ein drittes Prisma 1.2 mittig auf der Mittelachse A angeordnet. Insbesondere bei Batteriezellen 7 mit einer besonders hohen axialen Erstreckung lässt sich der Mittenbereich eines jeweiligen Zellgehäuses 1 hierdurch noch zuverlässiger seitlich abstützen.

Die Figuren 3 und 4 zeigen ausschließlich Ausführungsbeispiele in denen der Hohlzylinder 1.1 und die Prismen 1.2 mehrteilig ausgeführt sind. Es ist auch denkbar, dass zumindest ein Prisma 1.2 monolithisch mit dem Hohlzylinder 1.1 ausgeführt ist. Das Zellgehäuse 1 kann zumindest anteilig Metall und/oder Kunststoff umfassen. Beispielsweise kann der Hohlzylinder 1.1 aus Metall und die jeweiligen Prismen 1.2 aus Kunststoff gefertigt sein. Die Prismen 1.2 können jedoch auch zumindest anteilig Metall umfassen, wie bereits beschrieben.

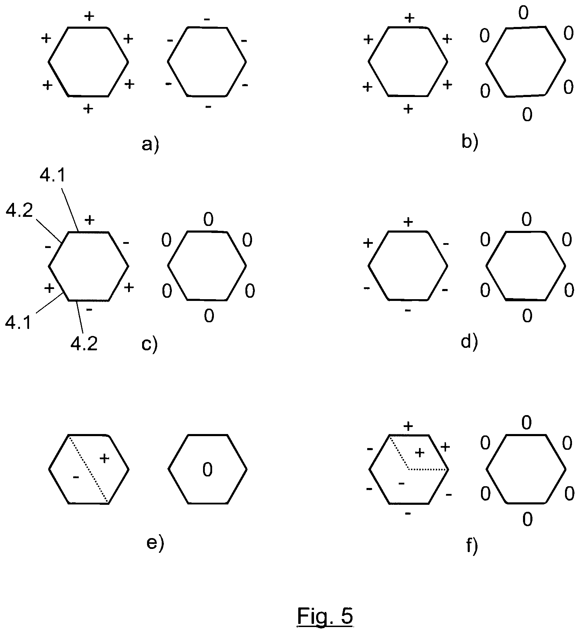

Wie Figur 5 zeigt, können an verschiedenen Stellen des Zellgehäuses 1 Kontaktpole zum miteinander elektrischen Verschalten mehrerer Batteriezellen 7 vorgesehen sein. Figur 5 zeigt in den Unterfiguren a) bis f) jeweils eine Draufsicht auf die jeweiligen Stirnseiten des Zellgehäuses 1. In den Figuren 5a) bis 5d) sind die jeweiligen Kontaktpole an den Seitenflächen 4 der Prismen 1.2 vorgesehen. Wie Figur 5a) zeigt können beispielsweise sämtliche Seitenflächen 4 eines jeweiligen Prismas 1.2 die gleiche Polung aufweisen, also als Pluspol bzw. Minuspol ausgeführt sein.

Figur 5b) zeigt, dass lediglich die Seitenflächen 4 eines der Prismen 1.2 des Zellgehäuses 1 einen Kontaktpol ausbilden können, das gegenüberliegende Prisma 1.2 jedoch vollständig elektrisch isoliert ist, was durch eine 0 angedeutet ist. Der Minuspol kann hier beispielsweise im Bereich des Hohlzylinders 1.1 vorgesehen sein, insbesondere ausgebildet durch dessen Mantelfläche.

Gemäß Figur 5c) können auch verschiedene Seitenflächen 4 eines jeweiligen Prismas 1.2 eine unterschiedliche Polung aufweisen. So ist eine erste Seitenfläche 4.1 mit einer ersten Elektrode der im Aufnahmeraum 2 angeordneten galvanischen Zelle 3 verbunden und eine zweite Seitenfläche 4.2 mit einer zweiten Elektrode der galvanischen Zelle 3. Auch hier bildet das gegenüberliegende Prisma 1.2 keinen Kontaktpol aus. Die jeweiligen Seitenflächen 4.1 und 4.2 sind elektrisch zueinander isoliert.

Figur 5d) zeigt eine besonders bevorzugte Ausführungsform die es erlaubt, auf besonders günstige Art und Weise einen Zellstapel herzustellen.

An dieser Stelle wird angemerkt, dass jede der Seitenflächen 4 eines jeweiligen Prismas 1.2 entweder einen Pluspol, einen Minuspol oder aber, wie durch besagte 0 angedeutet, elektrisch isoliert ausgeführt sein kann. Dabei lassen sich alle möglichen Kombinationen realisieren. So kann beispielsweise lediglich eine Seitenfläche 4 eines einzigen Prismas 1.2 oder mehrerer Prismen 1.2 einen Kontaktpol ausbilden, oder auch zwei, drei, vier oder auch mehrere oder alle Seitenflächen 4. Analog kann wenigstens eine Seitenfläche 4 elektrisch isoliert sein, oder auch zwei, drei, vier oder auch mehr oder alle Seitenflächen 4.

Figur 5e) zeigt eine Ausführungsform, bei der die Abschnitte 5.1 und 5.2 der Grundfläche eines der Prismen 1.2 einen jeweiligen Plus- und Minuspol ausbilden, das gegenüberliegende Prisma 1.2 jedoch keinen Kontaktpol ausbildet.

Figur 5f) zeigt eine kombinierte Ausführungsform, bei der sowohl die Abschnitte 5.1 und 5.2 der Grundfläche eines Prismas 1.2 sowie dessen Seitenflächen 4 Kontaktpole ausbilden.

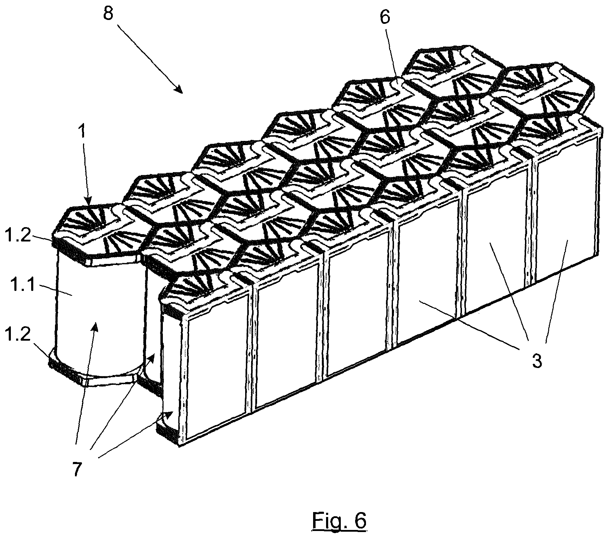

Figur 6 zeigt einen Ausschnitt eines erfindungsgemäßen Batteriemoduls 8, bei dem mehrere erfindungsgemäße Batteriezellen 7 zu einem Zellstapel angeordnet sind. Eine erfindungsgemäße Batterie, insbesondere ausgeführt als Traktionsbatterie für ein Fahrzeug, umfasst vorteilhaft mehrere elektrisch miteinander verschaltete Batteriemodule 8. Bei der hier gezeigten Ausführungsform sind die Kontaktpole an der Grundfläche der in Figur 6 nach oben zeigenden Prismen 1.2 vorgesehen. Auf eine Darstellung etwaiger Zellverbinder wurde verzichtet. Das erfindungsgemäße Batteriemodul 8 zeichnet sich durch ein im Vergleich zu einer Ausführung des jeweiligen vollständigen Zellgehäuses 1 in einer prismatischen Form durch einen geringeren Materialeinsatz und damit auch ein geringeres Gewicht aus. Zudem stützen sich die einzelnen Zellgehäuse 1 über die Seitenflächen 4 der Prismen 1.2 aneinander ab, sodass es nicht notwendig ist, eine Vergussmasse in den Zwischenraum zwischen den jeweiligen Zellgehäusen 1 einzufüllen. Stattdessen könnte hier ein Kühlmedium vorgesehen werden. Zudem sind die Hohlzylinder 1.1, mit Ausnahme etwaiger Berührlinien, zueinander beabstandet, was die Gefahr beim thermischen Durchgehen zumindest einer Batteriezelle 7 reduziert.

## Patentansprüche

1. Zellgehäuse (1), ausbildendend einen Aufnahmeraum (2) für eine galvanische Zelle (3), wobei das Zellgehäuse (1) in wenigstens einer Querschnittsebene die Querschnittsform eines regelmäßigen Polygons aufweist,
wobei
der Aufnahmeraum (2) durch einen Hohlzylinder (1.1) ausgebildet ist, wobei der Hohlzylinder (1.1) in Richtung seiner Mittelachse (A) betrachtet an wenigstens zwei Axialpositionen mit jeweils einem Prisma (1.2) versehen ist, wobei sämtliche Prismen (1.2) die Querschnittsform des regelmäßigen Polygons aufweisen, und
wobei die Summe der Höhen (h) aller Prismen (1.2) geringer ist, als die Höhe (H) des Hohlzylinders (1.1),
**dadurch gekennzeichnet, dass**
der Inkreisradius (rᵢ) des regelmäßigen Polygons gleich groß ist wie der Außenradius (R) des Hohlzylinders (1.1).

2. Zellgehäuse (1) nach Anspruch 1,
**dadurch gekennzeichnet, dass**
wenigstens ein Prisma (1.2) monolithisch mit dem Hohlzylinder (1.1) ausgeführt ist.

3. Zellgehäuse (1) nach Anspruch 1 oder 2,
**dadurch gekennzeichnet, dass**
die Grundfläche zumindest eines Prismas (1.2) bündig mit einer Stirnseite des Hohlzylinders (1.1) abschließt.

4. Zellgehäuse (1) nach einem der Ansprüche 1 bis 3,
**dadurch gekennzeichnet, dass**
der Hohlzylinder (1.1) und/oder wenigstens ein Prisma (1.2) zumindest anteilig Metall und/oder Kunststoff umfasst.

5. Zellgehäuse (1) nach einem der Ansprüche 1 bis 4,
**dadurch gekennzeichnet, dass**
- wenigstens eine Seitenfläche (4) zumindest eines Prismas (1.2) einen Kontaktpol zum elektrischen Verschalten mehrerer galvanischer Zellen (3) ausbildet, wobei hierzu die wenigstens eine Seitenfläche (4) mit einer Elektrode einer im Aufnahmeraum anordbaren galvanischen Zelle (3) verbindbar ist; und/oder
- wenigstens ein Abschnitt (5.1, 5.2) der Grundfläche zumindest eines Prismas (1.2) einen Kontaktpol zum elektrischen Verschalten mehrerer galvanischer Zellen (3) ausbildet, wobei hierzu der wenigstens eine Abschnitt (5.1, 5.2) mit einer Elektrode einer im Aufnahmeraum anordbaren galvanischen Zelle (3) verbindbar ist.

6. Zellgehäuse (1) nach Anspruch 5,
**dadurch gekennzeichnet, dass**
- eine erste Seitenfläche (4.1) eines ersten Prismas (1.2) mit einer ersten Elektrode der im Aufnahmeraum anordbaren galvanischen Zelle (3) verbindbar ist und eine zweite Seitenfläche (4.2) des ersten Prismas (1.2) mit einer zweiten Elektrode der im Aufnahmeraum anordbaren galvanischen Zelle (3) verbindbar ist, wobei die erste Seitenfläche (4.1) und die zweite Seitenfläche (4.2) zueinander elektrisch isoliert sind; und/oder
- ein erster Abschnitt (5.1) der Grundfläche eines ersten Prismas (1.2) mit einer ersten Elektrode der im Aufnahmeraum anordbaren galvanischen Zelle (3) verbindbar ist und ein zweiter Abschnitt (5.2) der Grundfläche des ersten Prismas (1.2) mit einer zweiten Elektrode der im Aufnahmeraum anordbaren galvanischen Zelle (3) verbindbar ist, wobei der erste Abschnitt (5.1) und der zweite Abschnitt (5.2) zueinander elektrisch isoliert sind.

7. Zellgehäuse (1) nach einem der Ansprüche 1 bis 6,
**dadurch gekennzeichnet, dass**
wenigstens eine Seitenfläche (4) zumindest eines Prismas (1.2) mit einem elektrischen Isolator (6) versehen ist oder das zumindest eine Prisma (1.2) vollständig aus einem elektrisch nicht leitfähigem Material besteht.

8. Batteriezelle (7), umfassend wenigstens eine galvanische Zelle (3), insbesondere ausgeführt als Elektrodenwickel,
**gekennzeichnet durch**
ein Zellgehäuse (1) nach einem der Ansprüche 1 bis 7, wobei die galvanische Zelle (3) im Aufnahmeraum (2) des Zellgehäuses (1) angeordnet ist.

9. Batteriemodul (8),
**gekennzeichnet durch**
wenigstens zwei miteinander elektrisch verschaltete Batteriezellen (7) nach Anspruch 8.

10. Batteriemodul (8) nach Anspruch 9,
**dadurch gekennzeichnet, dass**
wenigstens zwei einander berührende Zellgehäuse (1) an ihrer jeweiligen Berührfläche und/oder Berührlinie miteinander stoffschlüssig verbunden sind, insbesondere verschweißt.

11. Batterie,
**gekennzeichnet durch**
wenigstens ein Batteriemodul (8) nach Anspruch 9 oder 10.
